# EUROPÄISCHE PATENTSCHRIFT

(11) **EP 3 343 163 B1**
(45) Veröffentlichungstag und Bekanntmachung des Hinweises auf die Patenterteilung: **29.04.2020**
(21) Anmeldenummer: 17210673.4
(22) Anmeldetag: 27.12.2017
(51) Int. Cl.: F24D 3/08, F24D 10/00, F28D 9/00, F28F 9/02, F28F 19/00

(54) **WÄRMEÜBERGABEVORRICHTUNG**
HEAT TRANSFER DEVICE
DISPOSITIF DE TRANSFERT DE CHALEUR

(30) Priorität: 27.12.2016 DE 102016226232
(43) Veröffentlichungstag der Anmeldung: 04.07.2018
(73) Patentinhaber: Robert Bosch GmbH, 70442 Stuttgart (DE)
(72) Erfinder: Collins, Tom, Worcester, WR3 8XA (GB); Corbett, Brandon, Worcester,, WR66XY (GB)

(56) Entgegenhaltungen:
- EP-A2- 2 275 748
- DE-B1- 2 756 881
- DE-U1-202009 016 880
- DE-U1-202015 101 120
- US-A- 3 144 904
- US-A- 4 286 573
- US-A1- 2002 174 977
- Michael Y.Haller, Heinz Marty, Elimar Frank: "Verluste von Wärmespeichern vermeiden", HK-Gebäudetechnik, Nr. 6/12 8. August 2012 (2012-08-08), Seiten 32-34, XP002779843, Gefunden im Internet: URL:https://www.hk-gebaeudetechnik.ch/file admin/hk-gebaeudetechnik.ch/documents/PDF/ HK-GT_6-12_EWS_S32-34_Verluste_W%c3%a4rmes peicher_vermeiden_v99.pdf [gefunden am 2018-04-09]

## Beschreibung

### Stand der Technik

Es ist bereits eine Wärmeübergabevorrichtung zur Übertragung von Wärme von zumindest einem Primärkreislauf auf zumindest einen Sekundärkreislauf mit zumindest einem Wärmeübertrager, welcher eine Primärseite, die zu einer fluidtechnischen Verbindung mit dem Primärkreislauf vorgesehen ist, und eine Sekundärseite, die zu einer fluidtechnischen Verbindung mit dem Sekundärkreislauf vorgesehen ist, aufweist, bekannt. Das Dokument DE 20 2009 016 880 U1 zeigt eine Wärmeübergabevorrichtung nach dem Oberbegriff von Anspruch 1.

### Offenbarung der Erfindung

Die Erfindung geht aus von einer Wärmeübergabevorrichtung zur Übertragung von Wärme von zumindest einem Primärkreislauf auf zumindest einen Sekundärkreislauf mit zumindest einem Wärmeübertrager, welcher eine Primärseite, die zu einer fluidtechnischen Verbindung mit dem Primärkreislauf vorgesehen ist, und eine Sekundärseite, die zu einer fluidtechnischen Verbindung mit dem Sekundärkreislauf vorgesehen ist, aufweist. Die Erfindung wird durch den Anspruch 1 definiert.

Es wird vorgeschlagen, dass die Wärmeübergabevorrichtung zumindest eine Wärmefalle aufweist, welche zwischen einem primärseitigen Fluideinlass und/oder Fluidauslass des Wärmeübertragers und dem Primärkreislauf angeordnet ist und welche dazu vorgesehen ist, die Primärseite des Wärmeübertragers in zumindest einem Betriebszustand zumindest weitgehend thermisch von dem Primärkreislauf zu entkoppeln.

Unter einer "Wärmeübergabevorrichtung" soll in diesem Zusammenhang insbesondere eine Vorrichtung verstanden werden, welche dazu vorgesehen ist, Wärme von einem einen Primärkreislauf durchfließenden Heizmedium, insbesondere Wasser, zumindest teilweise auf ein einen Sekundärkreislauf durchfließendes Nutzmedium, insbesondere Wasser, zu übertragen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere sind der Primärkreislauf und der Sekundärkreislauf fluidtechnisch voneinander getrennt. Insbesondere findet kein Fluidaustausch zwischen dem Primärkreislauf und dem Sekundärkreislauf statt. Unter einem "Primärkreislauf" soll in diesem Zusammenhang insbesondere ein mit zumindest einem Wärmeerzeuger fluidtechnisch verbundener Fluidkreislauf verstanden werden. Unter einem "Wärmeerzeuger" soll in diesem Zusammenhang insbesondere eine Einheit verstanden werden, welche dazu vorgesehen ist, insbesondere unter Verwendung zumindest eines Energieträgers Wärmeenergie zu gewinnen und/oder nutzbar zu machen. Insbesondere ist die Wärmeerzeugereinheit als ein Heizkessel, beispielsweise als ein Gasheizkessel und/oder ein Ölheizkessel und/oder ein Pelletheizkessel, ausgebildet. Insbesondere ist der Wärmeerzeuger dazu vorgesehen, ein den Primärkreislauf durchfließendes Heizfluid zu erwärmen. Insbesondere wird der Primärkreislauf von einem Heizfluid, insbesondere Wasser, durchflossen. Unter einem "Sekundärkreislauf" soll in diesem Zusammenhang insbesondere ein Fluidkreislauf verstanden werden, welcher dazu vorgesehen ist, Wärme von dem Primärkreislauf aufzunehmen und/oder insbesondere durch eine Zuführung an einen Verbraucher nutzbar zu machen.

Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Gegenstrombetrieb, Kreuzstrombetrieb und/oder Gleichstrombetrieb. Insbesondere ist der Wärmeübertrager als ein Rekuperator ausgebildet. Vorzugsweise ist der Wärmeübertrager als ein Plattenwärmeübertrager ausgebildet. Insbesondere wird der Wärmeübertrager bei einer sekundärseitigen Anforderung von Wärme primärseitig von einem Fluid des Primärkreislaufs durchströmt und sekundärseitig von einem Fluid des Sekundärkreislaufs durchströmt. Insbesondere findet in einem Zeitraum zwischen zwei sekundärseitigen Anforderungen von Wärme keine primärseitige und/oder sekundärseitige Durchströmung des Wärmeübertragers statt. Unter einer "Wärmefalle" soll in diesem Zusammenhang insbesondere ein passives Fluidelement und/oder eine passive Fluideinheit verstanden werden, welche dazu vorgesehen ist, einen Wärmeeintrag von dem Primärkreislauf in die Primärseite des Wärmeübertragers in zumindest einem Betriebszustand, insbesondere wenn keine sekundäre Wärmeanforderung vorliegt, zumindest weitgehend zu verhindern. Insbesondere ist die Wärmefalle zumindest im Wesentlichen von einer Fluidleitung oder einer Fluidleitungsanordnung ausgebildet, welche eine Geometrie aufweist, die einen Wärmeeintrag von dem Primärkreislauf in die Primärseite des Wärmeübertragers in zumindest einem Betriebszustand zumindest weitgehend verhindert. Insbesondere verbindet die Wärmefalle den Wärmeübertrager fluidtechnisch mit dem Primärkreislauf.

Durch eine derartige Ausgestaltung kann eine gattungsgemäße Wärmeübergabevorrichtung mit verbesserten Betriebseigenschaften bereitgestellt werden. Insbesondere kann durch die thermische Entkopplung des Primärkreislaufs von der Primärseite des Wärmeübertragers, insbesondere während einer Stillstandzeit, während welcher keine sekundärseitige Wärmeanforderung vorliegt, vorteilhaft eine Erwärmung der Primärseite des Wärmeübertragers und ein Verkalken der Sekundärseite des Wärmeübertragers zumindest weitgehend vermieden werden.

Ferner wird vorgeschlagen, dass die Wärmefalle dazu vorgesehen ist, zwischen zumindest zwei sekundärseitigen Wärmeanforderungen eine Konvektion von Wärme von dem Primärkreislauf in die Primärseite des Wärmeübertragers zumindest weitgehend zu verhindern. Insbesondere ist die Wärmefalle dazu vorgesehen, während einer Stillstandzeit, in welcher keine sekundärseitige Wärmeanforderung vorliegt und der Wärmeübertrager primärseitig nicht durchströmt wird, eine Konvektion von Wärme von dem Primärkreislauf in die Primärseite des Wärmeübertragers zumindest weitgehend zu verhindern. Hierdurch können, insbesondere während einer Stillstandzeit, vorteilhaft eine Erwärmung der Primärseite des Wärmeübertragers und eine Verkalkung der Sekundärseite des Wärmeübertragers zumindest weitgehend vermieden werden.

Des Weiteren wird vorgeschlagen, dass die Wärmefalle zumindest einen abfallenden Fluidleitungsabschnitt aufweist, welcher ausgehend von dem Primärkreislauf in Richtung des Wärmeübertragers abfällt. Vorzugsweise fällt der abfallende Fluidleitungsabschnitt zumindest im Wesentlichen senkrecht ab. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere weist ein Fluid während einer Stillstandzeit in einem unteren Bereich des abfallenden Fluidleitungsabschnitts eine geringere Temperatur auf als ein an einem oberen Bereich des abfallenden Fluidabschnitts anstehendes Fluid des Primärkreislaufs. Aufgrund der geringeren Dichte des Fluides des Primärkreislaufs erfolgt eine Konvektion von Wärme lediglich in einem oberen Bereich des abfallenden Fluidabschnitts. Hierdurch kann eine Konvektion von Wärme von dem Primärkreislauf in die Primärseite des Wärmeübertragers vorteilhaft unterbunden werden.

Zudem wird vorgeschlagen, dass die Wärmefalle zumindest einen aufsteigenden Fluidleitungsabschnitt aufweist, welcher ausgehend von dem abfallenden Fluidleitungsabschnitt in Richtung des primärseitigen Fluideinlasses des Wärmeübertragers aufsteigt. Vorzugsweise steigt der aufsteigende Fluidleitungsabschnitt zumindest im Wesentlichen senkrecht auf. Ferner wird vorgeschlagen, dass der absteigende Fluidleitungsabschnitt und der aufsteigende Fluidleitungsabschnitt eine zumindest im Wesentlichen identische Länge aufweisen. Hierdurch kann eine Wirksamkeit der Wärmefalle vorteilhaft gesteigert werden.

In einer bevorzugten Ausgestaltung der Erfindung wird vorgeschlagen, dass die Wärmefalle zumindest eine Fluidleitung mit einem zumindest im Wesentlichen U-förmigen Verlauf aufweist.

Zudem wird eine Wärmeübergabestation mit zumindest einer erfindungsgemäßen Wärmeübergabevorrichtung vorgeschlagen. Unter einer Wärmeübergabestation soll in diesem Zusammenhang insbesondere eine Vorrichtung verstanden werden, welche insbesondere dazu vorgesehen ist, ein Hauswärmenetz insbesondere mit zumindest einem Nah- und/oder Fernwärmenetz zu koppeln. Hierdurch kann eine Wärmeübergabestation mit einer vorteilhaft langen Standzeit bereitgestellt werden.

Die erfindungsgemäße Wärmeübergabevorrichtung soll hierbei nicht auf die oben beschriebene Anwendung und Ausführungsform beschränkt sein. Insbesondere kann die erfindungsgemäße Wärmeübergabevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung einer Wärmeübergabestation mit einer Wärmeübergabevorrichtung, welche eine Wärmefalle aufweist, und
- Fig. 2: eine schematische Ansicht der Wärmefalle.

### Beschreibung des Ausführungsbeispiels

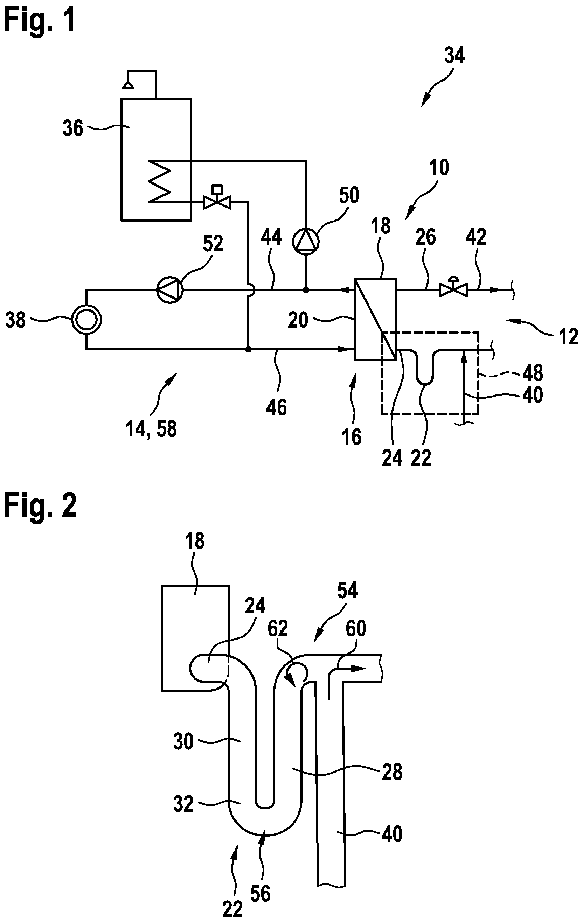

Figur 1 zeigt eine schematische Darstellung einer Wärmeübergabestation 34. Die Wärmeübergabestation 34 ist insbesondere dazu vorgesehen, ein hier nicht näher dargestelltes Wärmenetz, insbesondere ein Nah- oder Fernwärmenetz, mit einem Hauswärmenetz 58 zu koppeln. Die Wärmeübergabestation 34 weist eine Wärmeübergabevorrichtung 10 auf, welche zu einer Übertragung von Wärme von zumindest einem Primärkreislauf 12 auf zumindest einen Sekundärkreislauf 14 vorgesehen ist. Der Primärkreislauf 12 ist insbesondere von dem Wärmenetz ausgebildet. Der Sekundärkreislauf 14 ist insbesondere von dem Hauswärmenetz 58 ausgebildet. Der Sekundärkreislauf 14 kann beispielsweise zu einer Erwärmung von Trinkwasser innerhalb eines Warmwasserspeichers 36, zur einer Versorgung eines Heizkreises 38 und/oder zu einer unmittelbaren Erwärmung von Trinkwasser in einem Durchlaufbetrieb vorgesehen sein. Der Sekundärkreislauf 14 weist Pumpen 50, 52 auf, welche dazu vorgesehen sind, dem Warmwasserspeicher 36 und/oder dem Heizkreis 38 in Abhängigkeit von einer sekundärseitigen Wärmeanforderung ein Heizwasser des Sekundärkreislaufs 14 zuzuführen.

Die Wärmeübergabevorrichtung 10 weist einen Wärmeübertrager 16 mit einer Primärseite 18 und einer Sekundärseite 20 auf. Der Wärmeübertrager 16 ist vorzugsweise als ein Plattenwärmeübertrager ausgebildet. Die Primärseite 18 des Wärmeübertragers 16 ist zu einer fluidtechnischen Verbindung mit dem Primärkreislauf 12 vorgesehen. Der Primärkreislauf 12 umfasst eine Vorlaufleitung 40 und eine Rücklaufleitung 42. Die Sekundärseite 20 ist zu einer fluidtechnischen Verbindung mit dem Sekundärkreislauf 14 vorgesehen. Der Sekundärkreislauf 14 umfasst eine Vorlaufleitung 44 und eine Rücklaufleitung 46.

Aus dem Stand der Technik bekannte Wärmeübertrager, insbesondere Plattenwärmeübertrager, welche zu einer sekundärseitigen Erwärmung von Wasser verwendet werden, erleiden häufig sekundärseitig Verschmutzungen durch eine Verkalkung. Dies liegt daran, dass das sekundärseitige Wasser eine Konzentration an Calciumcarbonat und/oder Calciumbicarbonat aufweist, welche bei erhöhten Temperaturen in der Nähe von heißen Wärmeübertrageroberflächen, insbesondere Wärmeübertragerplatten, eine Ausscheidung von Ablagerungen auf den Wärmeübertrageroberflächen fördert. Verschmutzte Wärmeübertrager zeigen einen erhöhten Druckabfall, was zu niedrigeren Wasserströmungsgeschwindigkeiten für die Endverbraucher führt, und eine verminderte thermische Wirksamkeit, welche die Gesamtsystemeffizienz beeinträchtigt. Das Risiko und die Schwere von Verschmutzungen durch Verkalkung werden stark durch die Bedingungen des Wärmeübertrages zwischen sekundärseitigen Wärmeanforderungen beeinflusst, in denen innerhalb des Wärmeübertragers höhere Temperaturen durch Erwärmen durch natürliche Konvektion auftreten können.

Die Wärmeübergabevorrichtung 10 weist zumindest eine Wärmefalle 22 auf, welche erfindungsgemäß zwischen einem primärseitigen Fluideinlass 24 des Wärmeübertragers 16 und dem Primärkreislauf 12 angeordnet ist. Zusätzlich kann eine Wärmefalle 22 zwischen einem primärseitigen Fluidauslass 26 des Wärmeübertragers 16 und dem Primärkreislauf 12 angeordnet sein. Die Wärmefalle 22 ist dazu vorgesehen, die Primärseite 18 des Wärmeübertragers 16 in zumindest einem Betriebszustand thermisch von dem Primärkreislauf 12 zu entkoppeln. Vorzugsweise ist die Wärmefalle 22 dazu vorgesehen, in einer Stillstandzeit zwischen sekundärseitigen Wärmeanforderungen eine Konvektion von Wärme von dem Primärkreislauf 12 in die Primärseite 18 des Wärmeübertragers 16 zu verhindern.

Figur 2 zeigt den Bereich 48 der Wärmefalle 22 in einer schematischen Darstellung. Die Wärmefalle 22 umfasst eine Fluidleitung 32, welche einen zumindest im Wesentlichen U-förmigen Verlauf aufweist. Die Wärmefalle 22 weist zumindest einen abfallenden Fluidleitungsabschnitt 28 auf. Der abfallende Fluidleitungsabschnitt 28 fällt ausgehend von dem Primärkreislauf 12 in Richtung des Wärmeübertragers 16 ab. Der abfallende Fluidleitungsabschnitt 28 fällt zumindest im Wesentlichen senkrecht ab. Ferner weist die Wärmefalle 22 zumindest einen aufsteigenden Fluidleitungsabschnitt 30 auf. Der aufsteigende Fluidleitungsabschnitt 30 steigt ausgehend von dem abfallenden Fluidleitungsabschnitt 28 in Richtung des Wärmeübertragers 16 auf. Der aufsteigende Fluidleitungsabschnitt 30 steigt zumindest im Wesentlichen senkrecht auf. Der absteigende Fluidleitungsabschnitt 28 und der aufsteigende Fluidleitungsabschnitt 30 weisen eine zumindest im Wesentlichen identische Länge auf.

Die Wärmefalle 22 trennt durch den abfallenden Fluidleitungsabschnitt 28 den heißen Abschnitt 60 des Primärkreislaufs 12 thermisch von dem Wärmeübertrager 16. Die auf den abfallenden Fluidleitungsabschnitt 28 in Richtung des Wärmeübertragers 16 folgende 180°-Wende der Fluidleitung 32 und der aufsteigende Fluidleitungsabschnitt 30 verbessern die Wirkung der Wärmefalle 22 weiter. Da das Speisewasser des Primärkreislaufs 12 wärmer ist, als das während einer Stillstandzeit zwischen sekundärseitigen Wärmeanforderungen stagnierende Wasser in der Wärmefalle 22, welches durch Wärmeabgabe an die Umgebung abkühlt, wird die Vermischung von Wasser und damit die Ausbreitung von höherer Temperatur durch die Wärmefalle 22 durch thermische Auftriebseffekte gehemmt. Das Ergebnis ist, dass die Temperatur von Wasser in einem unteren Bereich 56 der Wärmefalle 22 während einer Stillstandzeit, während welcher der Wärmeübertrager 16 nicht verwendet wird, wesentlich geringer ist als eine Temperatur des Speisewassers in einem oberen Bereich 54 des abfallenden Fluidleitungsabschnitts 28 der Wärmefalle 22. Eine Konvektion 62 tritt ausschließlich in dem oberen Bereich 54 des abfallenden Fluidleitungsabschnitts 28 der Wärmefalle 22 auf. So kann der Wärmeübertrager 16 in einer Stillstandzeit zwischen sekundärseitigen Wärmeanforderungen sowohl primärseitig als auch sekundärseitig auf eine Umgebungstemperatur und somit auf eine Temperatur abkühlen, welche unterhalb einer Schwelle liegt, bei welcher eine Ausbildung von Ablagerungen auf der Sekundärseite 20 des Wärmeübertragers 16 gefördert wird.

## Patentansprüche

1. Wärmeübergabevorrichtung zur Übertragung von Wärme von zumindest einem Primärkreislauf (12) auf zumindest einen Sekundärkreislauf (14) mit zumindest einem Wärmeübertrager (16), welcher eine Primärseite (18), die zu einer fluidtechnischen Verbindung mit dem Primärkreislauf (12) vorgesehen ist, und eine Sekundärseite (20), die zu einer fluidtechnischen Verbindung mit dem Sekundärkreislauf (14) vorgesehen ist, aufweist, mit zumindest einer Wärmefalle (22), welche dazu vorgesehen ist, die Primärseite (18) des Wärmeübertragers (16) in zumindest einem Betriebszustand zumindest weitgehend thermisch von dem Primärkreislauf (12) zu entkoppeln , wobei die Wärmefalle (22) als ein passives Fluidelement und/oder eine passive Fluideinheit ausgebildet ist und dazu vorgesehen ist, einen Wärmeeintrag von dem Primärkreislauf (12) in die Primärseite (18) des Wärmeübertragers (16) in zumindest einem Betriebszustand zumindest weitgehend zu verhindern und wobei die Wärmefalle (22) zumindest im Wesentlichen von einer Fluidleitung (32) oder einer Fluidleitungsanordnung ausgebildet ist und eine Geometrie aufweist, die einen Wärmeeintrag von dem Primärkreislauf (12) in die Primärseite (18) des Wärmeübertragers (16) in zumindest einem Betriebszustand zumindest weitgehend verhindert, **dadurch gekennzeichnet, dass** die Wärmefalle (22) zwischen einem primärseitigen Fluideinlass (24) des Wärmeübertragers (16) und dem Primärkreislauf (12) angeordnet ist.

2. Wärmeübergabevorrichtung nach Anspruch 1, **dadurch gekennzeichnet, dass** die Wärmefalle (22) dazu vorgesehen ist, zwischen sekundärseitigen Wärmeanforderungen eine Konvektion von Wärme von dem Primärkreislauf (12) in die Primärseite (18) des Wärmeübertragers (16) zumindest weitgehend zu verhindern.

3. Wärmeübergabevorrichtung nach Anspruch 1 oder 2, **dadurch gekennzeichnet, dass** die Wärmefalle (22) zumindest einen abfallenden Fluidleitungsabschnitt (28) aufweist, welcher ausgehend von dem Primärkreislauf (12) in Richtung des Wärmeübertragers (16) abfällt.

4. Wärmeübergabevorrichtung nach Anspruch 3, **dadurch gekennzeichnet, dass** der abfallende Fluidleitungsabschnitt (28) zumindest im Wesentlichen senkrecht abfällt.

5. Wärmeübergabevorrichtung nach Anspruch 3 oder 4, **dadurch gekennzeichnet, dass** die Wärmefalle (22) zumindest einen aufsteigenden Fluidleitungsabschnitt (30) aufweist, welcher ausgehend von dem abfallenden Fluidleitungsabschnitt (28) in Richtung des Wärmeübertragers (16) aufsteigt.

6. Wärmeübergabevorrichtung nach Anspruch 5, **dadurch gekennzeichnet, dass** der aufsteigende Fluidleitungsabschnitt (30) zumindest im Wesentlichen senkrecht aufsteigt.

7. Wärmeübergabevorrichtung nach einem der Ansprüche 3 bis 5, **dadurch gekennzeichnet, dass** der absteigende Fluidleitungsabschnitt (28) und der aufsteigende Fluidleitungsabschnitt (30) eine zumindest im Wesentlichen identische Länge aufweisen.

8. Wärmeübergabevorrichtung nach einem der vorhergehenden Ansprüchen, **dadurch gekennzeichnet, dass** die Wärmefalle (22) zumindest eine Fluidleitung (32) mit einem zumindest im Wesentlichen U-förmigen Verlauf aufweist.

9. Wärmeübergabevorrichtung nach einem der vorhergehenden Ansprüche, **dadurch gekennzeichnet, dass** der Wärmeübertrager (16) als ein Plattenwärmeübertrager ausgebildet ist.

10. Wärmeübergabestation mit zumindest einer Wärmeübergabevorrichtung (10) nach einem der vorhergehenden Ansprüchen.

## Claims

1. Heat transfer device for transferring heat from at least one primary circuit (12) to at least one secondary circuit (14), having at least one heat exchanger (16), which has a primary side (18) provided for a fluidic connection to the primary circuit (12) and has a secondary side (20) provided for a fluidic connection to the secondary circuit (14), and having at least one heat trap (22), which is provided for at least largely thermally decoupling from the primary circuit (12) the primary side (18) of the heat exchanger (16) in at least one operating state, wherein the heat trap (22) is formed as a passive fluid element and/or a passive fluid unit and is provided for at least largely preventing an input of heat from the primary circuit (12) into the primary side (18) of the heat exchanger (16) in at least one operating state, and wherein the heat trap (22) is at least substantially formed by a fluid line (32) or a fluid line arrangement and has a geometry which at least largely prevents an input of heat from the primary circuit (12) into the primary side (18) of the heat exchanger (16) in at least one operating state, **characterized in that** the heat trap (22) is arranged between a primary-side fluid inlet (24) of the heat exchanger (16) and the primary circuit (12).

2. Heat transfer device according to Claim 1, **characterized in that** the heat trap (22) is provided for at least largely preventing a convection of heat from the primary circuit (12) to the primary side (18) of the heat exchanger (16) between secondary-side heat requirements.

3. Heat transfer device according to Claim 1 or 2, **characterized in that** the heat trap (22) has at least one descending fluid-line portion (28) which descends in the direction of the heat exchanger (16) from the primary circuit (12).

4. Heat transfer device according to Claim 3, **characterized in that** the descending fluid-line portion (28) descends in an at least substantially vertical manner.

5. Heat transfer device according to Claim 3 or 4, **characterized in that** the heat trap (22) has at least one ascending fluid-line portion (30) which ascends in the direction of the heat exchanger (16) from the descending fluid-line portion (28).

6. Heat transfer device according to Claim 5, **characterized in that** the ascending fluid-line portion (30) ascends in an at least substantially vertical manner.

7. Heat transfer device according to one of Claims 3 to 5, **characterized in that** the descending fluid-line portion (28) and the ascending fluid-line portion (30) have an at least substantially identical length.

8. Heat transfer device according to one of the preceding claims, **characterized in that** the heat trap (22) has at least one fluid line (32) with an at least substantially U-shaped profile.

9. Heat transfer device according to one of the preceding claims, **characterized in that** the heat exchanger (16) is designed as a plate-type heat exchanger.

10. Heat transfer station having at least one heat transfer device (10) according to one of the preceding claims.

## Revendications

1. Dispositif de transfert de chaleur pour le transfert de chaleur depuis au moins un circuit primaire (12) à au moins un circuit secondaire (14), comprenant au moins un échangeur de chaleur (16) qui présente un côté primaire (18) qui est prévu pour être connecté fluidiquement au circuit primaire (12) et un côté secondaire (20) qui est prévu pour être connecté fluidiquement au circuit secondaire (14), comprenant au moins un dissipateur thermique (22) qui est prévu pour désaccoupler thermiquement au moins essentiellement le côté primaire (18) de l'échangeur de chaleur (16) du circuit primaire (12) dans au moins un état de fonctionnement, le dissipateur thermique (22) étant réalisé sous forme d'élément fluide passif et/ou d'unité fluide passive et étant prévu pour empêcher au moins essentiellement un apport thermique depuis le circuit primaire (12) dans le côté primaire (18) de l'échangeur de chaleur (16) dans au moins un état de fonctionnement et le dissipateur thermique (22) étant réalisé au moins essentiellement par une conduite de fluide (32) ou un agencement de conduites de fluide et présentant une géométrie qui empêche au moins essentiellement un apport thermique depuis le circuit primaire (12) dans le côté primaire (18) de l'échangeur de chaleur (16) dans au moins un état de fonctionnement, **caractérisé en ce que** le dissipateur thermique (22) est disposé entre l'entrée de fluide du côté primaire (24) de l'échangeur de chaleur (16) et le circuit primaire (12).

2. Dispositif de transfert de chaleur selon la revendication 1, **caractérisé en ce que** le dissipateur thermique (22) est prévu pour empêcher au moins essentiellement, entre des demandes de chaleur du côté secondaire, une convection de chaleur depuis le circuit primaire (12) dans le côté primaire (18) de l'échangeur de chaleur (16).

3. Dispositif de transfert de chaleur selon la revendication 1 ou 2, **caractérisé en ce que** le dissipateur thermique (22) présente au moins une portion de conduite de fluide descendante (28) qui descend depuis le circuit primaire (12) dans la direction de l'échangeur de chaleur (16).

4. Dispositif de transfert de chaleur selon la revendication 3, **caractérisé en ce que** la portion de conduite de fluide descendante (28) descend au moins essentiellement verticalement.

5. Dispositif de transfert de chaleur selon la revendication 3 ou 4, **caractérisé en ce que** le dissipateur thermique (22) présente au moins une portion de conduite de fluide montante (30) qui monte à partir de la portion de conduite de fluide descendante (28) dans la direction de l'échangeur de chaleur (16).

6. Dispositif de transfert de chaleur selon la revendication 5, **caractérisé en ce que** la portion de conduite de fluide montante (30) monte au moins essentiellement verticalement.

7. Dispositif de transfert de chaleur selon l'une quelconque des revendications 3 à 5, **caractérisé en ce que** la portion de conduite de fluide descendante (28) et la portion de conduite de fluide montante (30) présentent une longueur au moins essentiellement identique.

8. Dispositif de transfert de chaleur selon l'une quelconque des revendications précédentes, **caractérisé en ce que** le dissipateur thermique (22) présente au moins une conduite de fluide (32) ayant une allure au moins essentiellement en forme de U.

9. Dispositif de transfert de chaleur selon l'une quelconque des revendications précédentes, **caractérisé en ce que** l'échangeur de chaleur (16) est réalisé sous forme d'échangeur de chaleur à plaques.

10. Poste de transfert de chaleur comprenant au moins un dispositif de transfert de chaleur (10) selon l'une quelconque des revendications précédentes.
